# FASCICULE DE BREVET EUROPEEN

(11) **EP 4 516 679 B1**
(45) Date de publication et mention de la délivrance du brevet: **02.07.2025**
(21) Numéro de dépôt: 24196845.2
(22) Date de dépôt: 28.08.2024
(51) Int. Cl.: B64D 29/06, B64C 7/02, B64D 29/08

(54) **PORTE DE SURPRESSION POUR UN CAPOTAGE D'EXTRÉMITÉ ARRIÈRE D'UN MÂT SUPPORT DE MOTEUR D'UN AÉRONEF**
ÜBERDRUCKTÜR FÜR EINE HECKHAUBE EINES TRIEBWERKSTRAGMASTES EINES FLUGZEUGS
OVERPRESSURE DOOR FOR A REAR FAIRING OF AN AIRCRAFT ENGINE PYLON

(30) Priorité: 28.08.2023 FR 2309026
(43) Date de publication de la demande: 05.03.2025
(73) Titulaire: Daher Aerospace, 94310 Orly (FR)
(72) Inventeur: RAGUET, Cyril, 31770 COLOMIERS (FR)
(74) Mandataire: Hamann, Jean-Christophe

(56) Documents cités:
- WO-A1-2023/275473
- US-A1- 2013 043 350
- US-A1- 2013 292 515
- US-A1- 2020 010 206
- US-A1- 2022 297 845
- US-A1- 2022 315 232

## Description

### Domaine technique

L'invention appartient au domaine des structures aéronautiques. Plus particulièrement, l'invention appartient au domaine des mâts pour le support des moteurs aux ailes d'un aéronef et de leur capotage.

### Technique antérieure

Les mâts sont des éléments d'aérostructure destinés à supporter les moteurs d'un aéronef, généralement mais non exclusivement sous les ailes de celui-ci, ainsi qu'à transmettre la poussée desdits moteurs à l'aéronef.

Ces mâts reçoivent un capotage aérodynamique constitué de panneaux métalliques minces ou en matériau composites, assemblés sur une structure sous jacente de raidisseurs.

Des équipements et notamment des tuyauteries de transport de fluides, notamment des tuyauteries d'air, utilisent l'espace interne protégé par lesdits capotages.

Dans des circonstances accidentelles, la rupture d'une telle tuyauterie est susceptible d'engendrer une surpression dangereuse à l'intérieur du capotage, avec le risque de dégradation dudit capotage et de l'exposition des éléments qu'il contient aux conditions extérieures.

Afin de limiter ce risque un capotage de mât moteur comprend au moins une porte de surpression qui s'ouvre qui s'ouvre automatiquement pour une pression déterminée, mettant ainsi l'intérieur du capotage à la pression externe et évitant sa dégradation.

Ces portes de surpression sont fréquemment intégrées à un panneau latéral de capotage du mât.

Le document EP2660148 décrit un dispositif de porte de surpression adaptable sur un panneau, les documents FR2920134 et EP2356028 décrivent des portes de suppression installées sur des nacelles, mais dont les principes de fonctionnent sont similaires à celle des portes de surpression installées sur un capotage de mât moteur.

Ces portes de suppression sont cependant fréquemment confondues, ou improprement utilisées, comme des trappes d'accès aux équipements situés sous les capotages, elles sont alors « forcées » par les opérateurs de maintenance au risque de dégrader leur fonctionnement, soit en compromettant leur fonction soit par des ouvertures intempestives.

Par exemple, le document FR3120854 / US2022/0297845 décrit un mât de réacteur comprenant un capot mobile permettant de pénétrer à l'intérieur du mât. Ce capot comprend un système de glissières permettant de déplacer celui-ci entre une position verrouillée et une position déverrouillée, de sorte à facilement ouvrir ce capot. Ainsi ce capot est une trappe de visite, destinée à être ouverte et fermée aisément pour accéder à l'intérieur du mât.

L'objet du capotage d'extrémité exposé ci-après est de réaliser une protection vis-à-vis des surpressions de sorte que si ce capotage est ouvert, soit par une surpression soit par un « forçage » il ne puisse justement pas être refermer aisément.

### Résumé de l'invention

L'invention vise à résoudre les inconvénients de l'art antérieur et concerne à cette fin un capotage d'extrémité arrière d'un mât moteur, le mât moteur étant configuré pour fixer un moteur à une aile d'un aéronef, ledit capotage d'extrémité comprenant une première partie fixée à l'un entre l'aile et le mât moteur, et une seconde partie en extrémité arrière, liée à la première partie par une charnière et un dispositif de traction apte à maintenir la seconde partie dans une configuration fermée en continuité étanche avec la première partie et l'un entre l'aile et le mât moteur auquel la première partie est fixée, dans lequel la charnière et le dispositif de traction sont réalisés par des moyens indépendants et séparés l'un de l'autre.

Ainsi, à la différence de l'art antérieur, l'utilisation de moyens indépendants pour la réalisation de la charnière et du dispositif de traction permet, selon les modes de réalisation, d'empêcher toute fermeture aisée du capotage lorsque celui-ci est ouvert

L'invention peut être mise en œuvre selon les modes de réalisation et les variantes exposées ci-après qui sont à considérer individuellement ou selon toute combinaison techniquement opérante.

Avantageusement, le dispositif de traction comprend un moyen de verrouillage pour maintenir la seconde partie en configuration fermée.

Avantageusement, le dispositif de traction comprend une bielle liée à une extrémité à la seconde partie et à une autre extrémité à la première partie, le moyen de verrouillage comprenant un dispositif de déverrouillage sous l'action d'une force de traction exercée sur la bielle, consécutive à un niveau de pression interne au capotage d'extrémité arrière et agissant sur la seconde partie, amenant la seconde partie dans une configuration ouverte.

Selon un mode de réalisation le moyen de verrouillage comprend une deuxième configuration de verrouillage lorsque la seconde partie est dans la configuration ouverte.

### Brève description des dessins

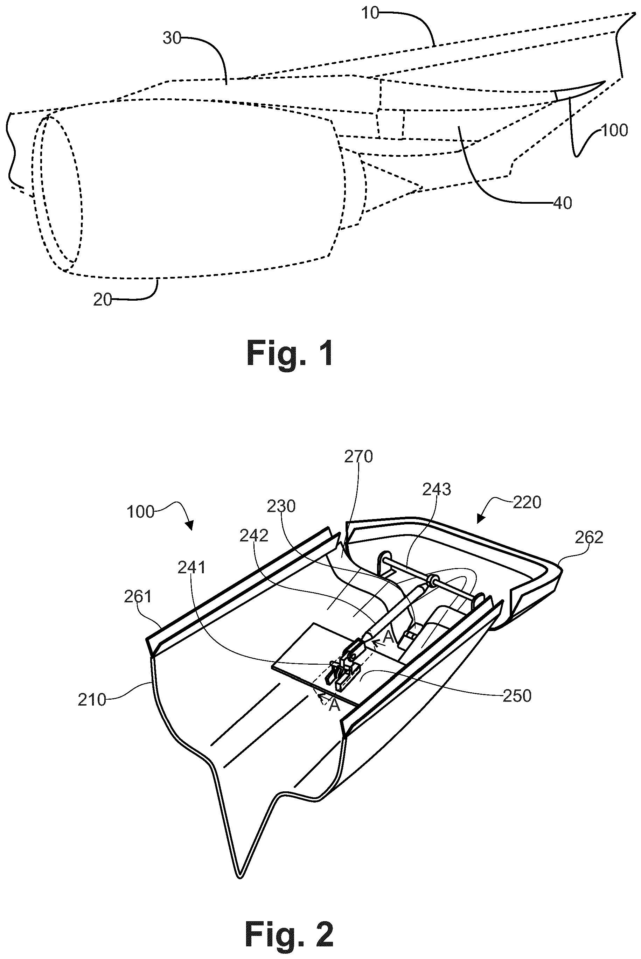

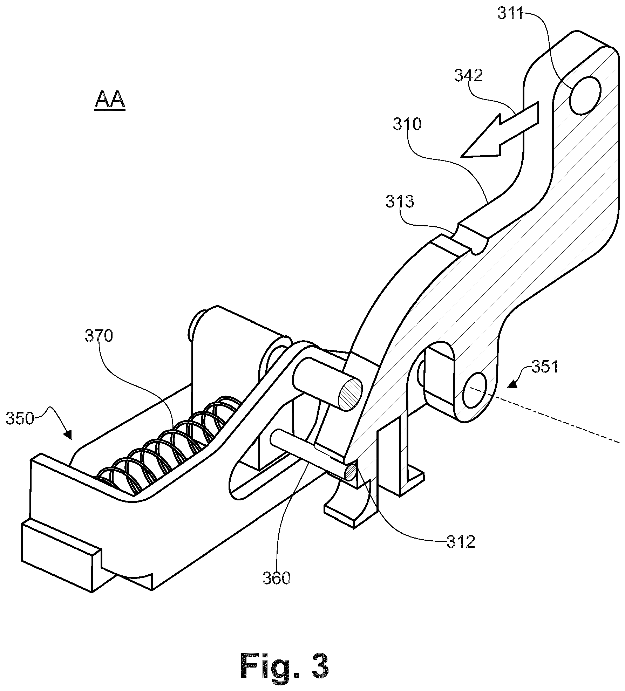

L'invention est mise en œuvre selon les modes de réalisation préférés, nullement limitatif, décrit ci-après en référence à [Fig.1] à [Fig.3] dans lesquelles :
**Fig.1**
   [Fig.1] est une vue en perspective d'un tronçon d'aile d'un aéronef comprenant un mât moteur ;
**Fig.2**
   [Fig.2] montre selon une vue en perspective un exemple de réalisation d'un capotage d'extrémité arrière avec une porte de surpression en configuration ouverte ;
**Fig.3**
   [Fig.3] montre selon une vue en perspective en coupe AA définie [Fig.2] un exemple de réalisation d'un dispositif de verrouillage.

### Description des modes de réalisation

[Fig.1] la porte de surpression (100) objet de l'invention se situe à l'extrémité arrière d'un capotage dit « *gutter* » qui s'étend entre l'extrémité arrière de la structure arrière de mât moteur (40), couramment désignée par RSS, cette dernière étant connectée, à l'avant, à un mât moteur (30) assurant la liaison d'un moteur (20) à une aile (10) d'un aéronef.

Ce capotage d'extrémité termine de manière aérodynamique la liaison de la structure arrière du mât avec l'intrados de l'aile dans cet exemple de réalisation.

Lhomme du métier comprend qu'une configuration similaire est possible sans sortir du domaine de l'invention lorsque le mât moteur est connecté sur la partie supérieure de l'aile et que le capotage d'extrémité arrière assure une liaison aérodynamique avec l'extrados de l'aile.

Ce capotage d'extrémité est une pièce creuse constituée d'un matériau métallique ou composite, liée de manière étanche à soit à l'aile soit au mât moteur par des fixations adaptées.

[Fig.2] le dispositif objet de l'invention (100) se situe à l'extrémité de ce capotage d'extrémité arrière, en prolongement de la forme aérodynamique extérieure. Cette zone est peut chargée du point de vue aérodynamique en vol ce qui permet d'alléger les dispositifs, plus particulièrement le dispositif de liaison et de verrouillage.

Selon cet exemple de réalisation, il comprend une première partie (210), ici fixée à l'aile et à la RSS, et une seconde partie (220) liée à la première partie par une charnière (230) et un mécanisme de verrouillage.

Selon un autre mode de réalisation (non représenté) la première partie est fixée au mât moteur.

Le mécanisme de verrouillage, représenté ici en configuration déverrouillée, comprend, selon cet exemple de réalisation un verrou (241), fixé sur une plateforme (250) liée à la première partie (210), une bielle (242) et des moyens (243) pour accrocher la bielle à la seconde partie (220).

Les deux parties comprennent un joint périphérique (261, 262) assurant l'étanchéité avec l'aile, ou avec le mât moteur selon le mode de réalisation.

La porte de surpression est constituée par la deuxième partie (220), elle est ici représentée ouverte. Pour fermer celle-ci il faut la rapprocher de la première partie (210) en la faisant pivoter autour de la charnière (230) jusqu'au verrouillage. Les deux parties (210, 220) sont alors jointives, en prolongement l'une de l'autre, en liaison complète l'une avec l'autre, une bande d'étanchéité souple (270) interne et externe assurant l'étanchéité de la liaison.

Ainsi verrouillé le capotage d'extrémité peut être assemblé à l'aile et à la RSS.

Le mécanisme de déverrouillage est taré pour se déclencher à une surpression déterminée. En l'occurrence d'un tel évènement, ledit mécanisme se déclenche et pousse la seconde partie (220) qui s'ouvre mettant à l'air libre l'ensemble des volumes délimité par des capotages du mât.

[Fig.3] selon un exemple de réalisation le verrou comprend une came (310) articulée autour d'une liaison pivot (351) dans une chappe (350) qui est fixée à la plateforme.

La bielle (non représentée) est liée au sommet de la came par une liaison pivot. Dans la configuration de [Fig.3] la porte de surpression est fermée, c'est-à-dire que [Fig.2] la seconde partie (220) et jointive avec la première partie et le joint (262) est appliqué au contact de l'aile.

Dans le cas d'une surpression, la pression appliquée sur le deuxième partie (220) pousse celle-ci pour l'amener dans la configuration de [Fig.2]. La traction ainsi appliquée sur la bielle (242) tire sur la partie supérieure de la came (310) selon une force (342).

En revenant à [Fig.3] la force (342) appliquée par la bielle tend à faire tourner la came (310) autour de son axe pivot. Ladite came (310) est cependant bloquée par une aiguille (360) qui coopèrent avec une butée (312) formant rochet pratiquée à la surface de came.

L'aiguille (360) est maintenue au contact de la butée (312) par l'intermédiaire d'un basculeur (361). Ledit basculeur est en liaison pivot avec la chappe (350) et est maintenu dans la position de [Fig.3] par un ressort de compression (370) taré à une force donnée. En quelque sorte l'ensemble basculeur, aiguille et ressort forment un cliquet qui coopère avec la butée (312) formant rochet.

Lorsque la force (342) agissant sur la came devient trop élevée, c'est-à dire en présence d'une surpression, la butée (312) escamote l'aiguille (360) qui pivotent avec le basculeur (361) la force exercée par le ressort (370) n'étant plus suffisante pour maintenir le basculeur en position.

La came pivote autour de son axe de pivot (351) permettant ainsi à la bielle de se déplacer dans le sens de la force (342) et à la porte de surpression de s'ouvrir.

La came (310) continue sa rotation jusqu'à ce que l'aiguille (360) vienne, sous l'action du ressort (370), se loger dans une encoche (313) aménagée à la surface de la came. La came et la bielle sont alors boquées dans cette position, dite déverrouillée, et la porte de surpression reste ouverte.

La position déverrouillée est stable de sorte que la deuxième partie (220) ne peut plus revenir naturellement en alignement avec la première partie et le seul moyen de refermer la porte de surpression est de démonter tout le capotage d'extrémité arrière.

A la différence de l'art antérieur, les fonctions d'articulation et de traction tarée de la deuxième partie (220) par rapport à la première partie (210) sont réalisées par des dispositifs séparé agissant indépendamment l'un de l'autre, en l'occurrence la charnière (230) pour l'articulation et la bielle (242) associée aux moyens de verrouillage pour l'application d'une partie contre l'autre, là où, par exemple, FR3120854, utilise une même bielle pour assurer ces deux fonctions.

La séparation de ces fonctions permet à la fois une ouverture rapide et efficace en cas de surpression tout en empêchant de refermer le capotage sans démontage lorsque celui-ci est ouvert, quelle qu'en soit la cause.

Ainsi, d'une part, la position de la porte de surpression, à l'extrémité arrière du capotage d'extrémité arrière, n'incite pas un opérateur à forcer l'ouverture de cette porte pour accéder à des équipements.

De plus, si un opérateur indélicat force malgré tout l'ouverture de la porte de surpression, il lui est impossible de la refermer, sauf à démonter l'ensemble de du capotage d'extrémité arrière, ce qui nécessite le signalement à un superviseur.

## Revendications

1. Capotage (100) d'extrémité arrière d'un mât moteur, le mât moteur (30) étant configuré pour fixer un moteur (20) à une aile (10) d'un aéronef, ledit capotage d'extrémité comprenant une première partie (210) fixée à l'un entre l'aile et le mât moteur, et une seconde (220) partie en extrémité arrière, liée à la première partie (210) par une charnière (230) et un dispositif de traction (241,242, 243) apte à maintenir la seconde partie (220) dans une configuration fermée en continuité étanche avec la première partie (210) et l'un entre l'aile et le mât moteur auquel la première partie est fixée, **caractérisé en ce que** la charnière (230) et le dispositif de traction (241,242, 243) sont réalisés par des moyens séparés l'un de l'autre.

2. Capotage selon la revendication 1, dans lequel le dispositif de traction comprend un moyen de verrouillage (241) pour maintenir la seconde partie (220) en configuration fermée.

3. Capotage selon la revendication 2, dans lequel le dispositif de traction comprend une bielle (242) liée à une extrémité à la seconde partie (220) et à une autre extrémité à la première partie (210), le moyen de verrouillage (241) comprenant un dispositif de déverrouillage sous l'action d'une force de traction (342) exercée sur la bielle (242), consécutive à un niveau de pression interne au capotage d'extrémité arrière et agissant sur la seconde partie (220), amenant la seconde partie dans une configuration ouverte.

4. Capotage selon la revendication 3, dans lequel le moyen de verrouillage (241) comprend une deuxième configuration de verrouillage lorsque la seconde partie (220) est dans la configuration ouverte.

## Patentansprüche

1. Hintere Heckhaube (100) eines Triebwerksmastes, wobei der Triebwerksmast (30) so konfiguriert ist, dass er ein Triebwerk (20) an einem Flügel (10) eines Luftfahrzeugs befestigt, wobei die hintere Verkleidung einen ersten Teil (210), der entweder am Flügel oder am Triebwerksmast befestigt ist, und einen zweiten Teil (220) am hinteren Ende umfasst, der mit dem ersten Teil (210) durch ein Scharnier (230) und eine Zugvorrichtung (241, 242) (230), die in der Lage ist, den zweiten Teil (220) in einer geschlossenen Konfiguration in dichter Kontinuität mit dem ersten Teil (210) und dem Flügel oder dem Motorträger, an dem der erste Teil befestigt ist, zu halten, **dadurch gekennzeichnet, dass** das Scharnier (230) und die Zugvorrichtung (241, 242, 243) sind durch unabhängige Mittel hergestellt und voneinander getrennt.

2. Heckhaube nach Anspruch 1, wobei die Zugvorrichtung ein Verriegelungsmittel (241) umfasst, um das zweite Teil (220) in der geschlossenen Konfiguration zu halten.

3. Heckhaube nach Anspruch 2, **dadurch gekennzeichnet, dass** die Zugvorrichtung eine Stange (242) umfasst, die an einem Ende mit dem zweiten Teil (220) und am anderen Ende mit dem ersten Teil (210) verbunden ist, wobei die Verriegelungsvorrichtung (241) eine Entriegelungsvorrichtung umfasst, die unter der Wirkung einer auf die Stange (242) ausgeübten Zugkraft (342), die einem Innendruckniveau am hinteren Ende der Verkleidung folgt und auf den zweiten Teil (220) wirkt, den zweiten Teil in eine offene Konfiguration bringt.

4. Heckhaube nach Anspruch 3, wobei das Verriegelungsmittel (241) eine zweite Verriegelungskonfiguration aufweist, wenn sich der zweite Teil (220) in der offenen Konfiguration befindet.

## Claims

1. Rear fairing (100) of an engine pylon, the engine pylon (30) being configured to attach an engine (20) to a wing (10) of an aircraft, said rear end cowling comprising a first part (210) attached to one of the wing and the engine pylon, and a second part (220) at the rear end, connected to the first part (210) by a hinge (230) and a traction device (241, 242, 243) capable of holding the second part (220) in a closed configuration in sealed continuity with the first part (210) and one of the wing and the engine pylon to which the first part is attached, **characterized in that** the hinge (230) and the traction device (241, 242, 243) are made by independent means and separated from each other.

2. The fairing of claim 1, wherein the traction device comprises a locking means (241) to keep the second part (220) in the closed configuration.

3. The fairing of claim 2, wherein the traction device comprises a rod (242) connected at one end to the second part (220) and at another end to the first part (210), the locking means (241) comprising an unlocking device under the action of a pulling force (342) exerted on the rod (242), following an internal pressure level at the rear end of the cowling and acting on the second part (220), bringing the second part into an open configuration.

4. The fairing of claim 3, wherein the locking means (241) comprises a second locking configuration when the second part (220) is in the open configuration.
